# EUROPEAN PATENT APPLICATION

(11) **EP 4 772 024 A1**
(43) Date of publication of application: **08.07.2026**
(21) Application number: 24859557.1
(22) Date of filing: 21.08.2024
(51) Int. Cl.: A23L 27/00, A23L 27/20, C11B 5/00, C11B 9/00

(54) **OFF-ODOR SUPPRESSING AGENT, FRAGRANCE COMPOSITION FOR SUPPRESSING OFF-ODOR, AND FOOD AND DRINK IN WHICH OFF-ODOR CONTAINED THEREIN IS MASKED**

(30) Priority: 31.08.2023 JP 2023141661
(71) Applicant: Takasago International Corporation, Tokyo 144-8721 (JP)
(72) Inventor: SAGEHASHI, Atsushi, Hiratsuka-shi, Kanagawa 254-0073 (JP); YAMAGUCHI, Kayoko, Hiratsuka-shi, Kanagawa 254-0073 (JP); KIJIMA, Kyoko, Hiratsuka-shi, Kanagawa 254-0073 (JP); MURAI, Masato, Hiratsuka-shi, Kanagawa 254-0073 (JP)
(74) Representative: Hoffmann Eitle
(86) International application number: PCT/JP2024/029561
(87) International publication number: WO 2025/047524

(57) **Abstract**

The present invention pertains to an off-odor suppressing agent and a fragrance composition for suppressing off-odor, which are for masking off-odors contained in food and drink. The present invention also pertains to food and drink in which off-odors contained therein are suppressed. An off-odor suppressing agent according to the present invention is for masking off-odors contained in food and drink. A substance that causes the off-odor is a substance that triggers olfactory receptor polypeptide response, the polypeptide being at least one selected from the group consisting of olfactory receptor OR2AG2 and a polypeptide that includes an amino acid sequence having 80% or more identity with the amino acid sequence of said olfactory receptor and that responds to the off-odor-causing substance. The off-odor suppressing agent contains, as a masking component, one or more selected from the group consisting of isoamyl cinnamate, cinnamyl cinnamate, δ-damascone, 2,3-heptanedione, carvacrol, vanitol, and 5-methyl-2-phenyl-2-hexenal.

## Description

### Technical Field

The present invention pertains to an off-odor suppressing agent for masking an off-odor contained in food or drink, a flavor composition for suppressing off-odor, and a food or drink in which an off-odor contained therein is masked.

### Background Art

There are various aromas that are originally contained, or generated over time, in foods and drinks. For example, more than 850 aroma components have been identified in roasted coffee (Non Patent Literature 1).

Among the aroma components, there are also unpleasant or undesirable odors, and of these, examples of those referred to as off-odors (off-flavors) include dust odor (or earthy odor). When dust odor is present in food, it is perceived as dusty, earthy, grassy, powdery, medicinal, and moldy.

For example, Patent Literature 1 describes the problem that in confectioneries such as chewing gum, in which the high-intensity sweetener aspartame is combined with certain fruit flavors and the like, a grassy flavor, which becomes dusty, earthy, powdery, medicinal, or moldy, i.e., a dust odor, is generated over time. This "dust odor" is variously described by combinations of expressions such as earthy, dusty, musty/moldy, smoky, galbanum-like, bell pepper-like, vegetable-like, and green pea-like. In the literature, it is often expressed in a two-word abbreviated form ("primary note-secondary note"), such as "earthy-dusty," "earthy-musty," or "dusty-moldy," and although understood at a sensory level, these expressions are not standardized due to their sensory nature.

In addition, Non Patent Literature 2 lists geosmin as a substance that causes earthy off-odors in wine.

Countermeasures against such off-odor substances can be broadly classified into methods for suppressing the formation of the off-odor substances and methods for masking the off-odors that are generated. As an example of the former, Patent Literature 2 describes a method for suppressing the light degradation of apple juice containing apple flavor using purified rosmarinic acid. As an example of the latter, Patent Literature 3 describes a method for reducing the perception of (masking) p-cresol, known as a degradation odor of citral.

### Citation List

### Patent Literature

Patent Literature 1: Japanese Patent Laid-Open No. 2009-131228
Patent Literature 2: Japanese Patent Laid-Open No. 2001-342489
Patent Literature 3: International Publication No. WO 2021/235360

### Non Patent Literature

Non Patent Literature 1: The TAKASAGO Times, No. 170 (2012), p. 6, Takasago International Corporation, IR/Public Relations Department
Non Patent Literature 2: Earthy off-flavour in wine: Evaluation of remedial treatments for geosmin contamination (Food Chemistry 154 (2014) 171-178)

### Summary of Invention

### Technical Problem

There is a need for providing a technique for masking off-odors contained in food and drink, particularly off-odors expressed as "dust odor." In particular, it is desirable that the above off-odor can be masked without impairing the flavor of the food or drink.

### Solution to Problem

The present invention includes the following embodiments [1] to [8]:
[1] An off-odor suppressing agent for masking an off-odor contained in food or drink,
   wherein a substance that causes the off-odor is a substance that triggers olfactory receptor polypeptide response, the polypeptide being at least one selected from the group consisting of olfactory receptor OR2AG2 and polypeptides that comprise an amino acid sequence having 80% or more identity with the amino acid sequence of the olfactory receptor and that are responsive to off-odor-causing substances, and
   the off-odor suppressing agent comprises, as a masking component, one or more selected from the group consisting of isoamyl cinnamate, cinnamyl cinnamate, δ-damascone, 2,3-heptanedione, carvacrol, vanitol, and 5-methyl-2-phenyl-2-hexenal.
[2] The off-odor suppressing agent according to [1], wherein the substance that causes the off-odor comprises one or more selected from the group consisting of compounds represented by the following formula (1) or (2): 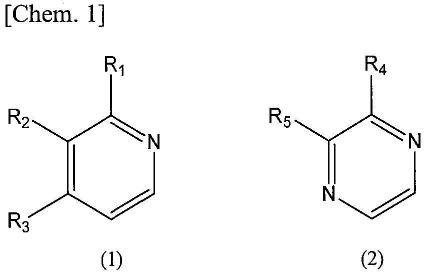
   wherein, in formula (1), R₁ represents a hydrogen atom, an unbranched alkyl group having 1 to 3 carbon atoms, an optionally branched alkyl group having 4 to 6 carbon atoms, or an alkoxy group having 1 to 3 carbon atoms; R₂ and R₃ each independently represent a hydrogen atom, an optionally branched alkyl group having 1 to 6 carbon atoms, or an alkoxy group having 1 to 3 carbon atoms; and
   in formula (2), R₄ and R₅ each independently represent a hydrogen atom, an optionally branched alkyl group having 1 to 6 carbon atoms, or an alkoxy group having 1 to 3 carbon atoms.
[3] The off-odor suppressing agent according to [1], wherein the substance that causes the off-odor comprises an off-odor substance generated in food or drink comprising one or more selected from the group consisting of aspartame, trans-2-hexenal, and hexanal.
[4] The off-odor suppressing agent according to any one of [1] to [3], wherein the substance that causes the off-odor comprises one or more selected from the group consisting of 3-ethyl-2-pentylpyridine, 2-sec-butyl-3-methoxypyrazine, 2-isobutyl-3-methoxypyrazine, 2-methoxy-3-isopropylpyrazine, and 2-isobutylpyridine.
[5] The off-odor suppressing agent according to any one of [1] to [4], wherein the off-odor is an off-odor expressed as "dust odor,"
   has at least one odor characteristic selected from the group consisting of dusty, and optionally, earthy, grassy, powdery, medicinal, and moldy,
   is an odor that comprises, as a primary note, at least one expression selected from the group consisting of "dusty," "earthy," and "grassy (bell pepper-like or vegetable-like)," or expressions similar thereto, as a descriptor expressing the odor characteristic, and
   optionally, is an odor that causes discomfort to humans.
[6] A flavor composition for suppressing off-odor, which masks an off-odor contained in food or drink, the composition comprising the off-odor suppressing agent according to any one of [1] to [5].
[7] A food or drink comprising the off-odor suppressing agent according to any one of [1] to [5].

### Advantageous Effects of Invention

By using the off-odor suppressing agent of the present invention, it is possible to mask an off-odor such as a dust odor contained in food or drink without impairing the flavor of the food or drink.

### Brief Description of Drawings

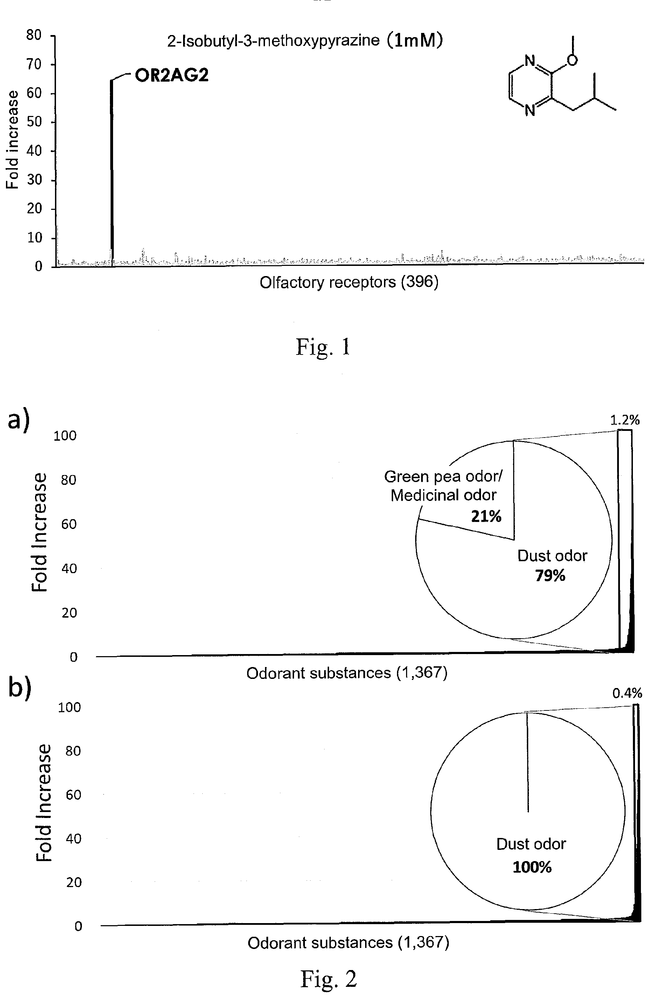

[Figure 1] Figure 1 is a diagram showing the results of olfactory receptor screening for 2-isobutyl-3-methoxypyrazine.
[Figure 2] Figure 2 is a diagram based on the screening of the responses of olfactory receptor OR2AG2 to 1,367 odorant compounds, which shows the proportion of those that responded with a) a Fold Increase value of 3 or more for OR2AG2, and b) a Fold Increase value of 50 or more for OR2AG2, and the primary note proportion thereof.

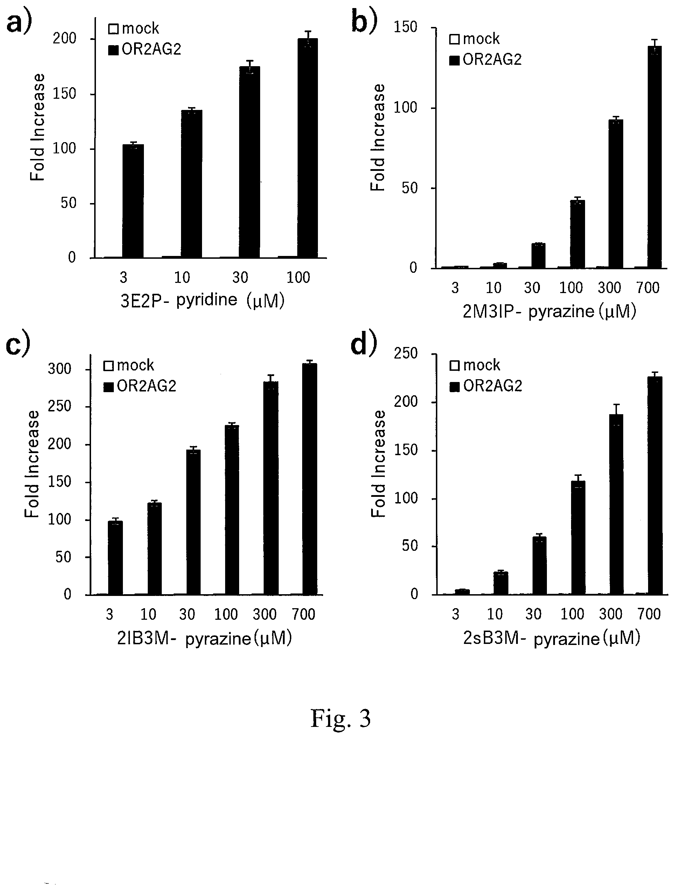

[Figure 3] Figure 3 is a diagram showing the results of measuring the concentration-dependent responses of olfactory receptor OR2AG2 to a) 3-ethyl-2-pentylpyridine (3E2P-pyridine), b) 2-methoxy-3-isopropylpyrazine (2M3IP-pyrazine), c) 2-isobutyl-3-methoxypyrazine (2IB3M-pyrazine), and d) 2-sec-butyl-3-methoxypyrazine (2sB3M-pyrazine).

### Description of Embodiments

### Summary of Present Invention

In the present invention, the substance that causes an off-odor contained in food or drink is a substance that triggers olfactory receptor polypeptide response (hereinafter referred to as "triggers olfactory receptor OR2AG2 response"), the polypeptide being at least one selected from the group consisting of olfactory receptor OR2AG2 and polypeptides that comprise an amino acid sequence having 80% or more identity with the amino acid sequence of the olfactory receptor and that are responsive to off-odor-causing substances. The expression that an olfactory receptor polypeptide is responsive to an off-odor-causing substance means that there is a change in the responsiveness when comparing the baseline response of the olfactory receptor polypeptide prior to exposure to the off-odor-causing substance (T0) with the response of the olfactory receptor polypeptide to the off-odor at an arbitrary time after exposure to the off-odor-causing substance (Tx).

OR2AG2 is a protein registered in GenBank as NM_001004490, consisting of the amino acid sequence (SEQ ID No: 2) encoded by the DNA at positions 893 to 1843 of the base sequence shown in SEQ ID NO: 1.

The olfactory receptor polypeptide may be an olfactory receptor polypeptide selected from the group consisting of proteins (polypeptides) that comprise an amino acid sequence having 80% or more, preferably 85% or more, more preferably 90% or more, still more preferably 95% or more, and particularly preferably 98% or more identity with the amino acid sequence of OR2AG2, and that are responsive to off-odor-causing substances. In the present specification, sequence identity of the amino acid sequence is calculated using the BLAST search algorithm (publicly available from NCBI).

The present inventors conducted a screening of 396 human olfactory receptors for 2-isobutyl-3-methoxypyrazine, a representative substance of the "dust odor," in order to elucidate the chemical entity of an off-odor that is expressed as "dust odor" (or "earthy odor"), and identified that 2-isobutyl-3-methoxypyrazine exhibits a strong and specific response to olfactory receptor OR2AG2 (Figure 1). Furthermore, the present inventors screened the responses of the olfactory receptor OR2AG2 to as many as 1,367 odorant substances having various structures and odor notes, and summarized the relationship between OR2AG2 responses and odor notes. As a result, the following novel findings were obtained: (i) many odorant substances that respond to OR2AG2 exhibit characteristics of the "dust odor," (ii) the odorant substances that respond particularly strongly are all compounds with strong "dust odor" characteristics, and especially (iii) a group of compounds represented by the following formula (1) or (2) exhibits strong responses to OR2AG2 (Figures 2 and 3). 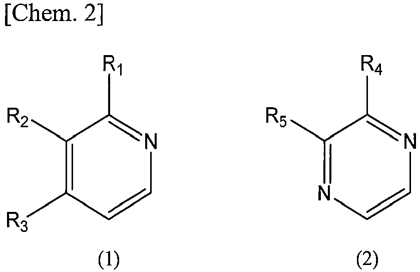
wherein, in formula (1), R₁ represents a hydrogen atom, an unbranched alkyl group having 1 to 3 carbon atoms, an optionally branched alkyl group having 4 to 6 carbon atoms, or an alkoxy group having 1 to 3 carbon atoms; R₂ and R₃ each independently represent a hydrogen atom, an optionally branched alkyl group having 1 to 6 carbon atoms, or an alkoxy group having 1 to 3 carbon atoms; and
in formula (2), R₄ and R₅ each independently represent a hydrogen atom, an optionally branched alkyl group having 1 to 6 carbon atoms, or an alkoxy group having 1 to 3 carbon atoms.

Here, examples of the optionally branched alkyl group having 1 to 6 carbon atoms include methyl, ethyl, propyl, isopropyl, n-butyl, isobutyl, sec-butyl, tert-butyl, n-pentyl, isopentyl, sec-pentyl, tert-pentyl, neopentyl, n-hexyl, 1-methylpentyl, 2-methylpentyl, 3-methylpentyl, and 2-ethylbutyl. Of these, methyl, ethyl, isopropyl, isobutyl, sec-butyl, and n-pentyl are preferred.

Examples of the unbranched alkyl group having 1 to 3 carbon atoms include methyl, ethyl, and propyl.

Examples of the optionally branched alkyl group having 4 to 6 carbon atoms include n-butyl, isobutyl, sec-butyl, tert-butyl, n-pentyl, isopentyl, sec-pentyl, tert-pentyl, neopentyl, n-hexyl, 1-methylpentyl, 2-methylpentyl, 3-methylpentyl, and 2-ethylbutyl.

Examples of the alkoxy group having 1 to 3 carbon atoms include methoxy, ethoxy, propoxy, and isopropoxy.

The off-odor suppressing agent of the present invention is suitably used for masking an off-odor caused by a substance contained in food or drink which triggers olfactory receptor OR2AG2 response.

Examples of masking components serving as active ingredients of the off-odor suppressing agent used in the present invention include isoamyl cinnamate, cinnamyl cinnamate, δ-damascone, 2,3-heptanedione, carvacrol, vanitol, and 5-methyl-2-phenyl-2-hexenal. All of these are known flavor components, and commercially available products can be used.

Some of these compounds have stereoisomers (cis-trans isomers, enantiomers, diastereomers, etc.), and a specific stereoisomer alone, or a mixture of such stereoisomers, can be used.

In the off-odor suppressing agent of the present invention, these masking components may be used alone or in combination of two or more.

The content of the masking component in the off-odor suppressing agent of the present invention is not particularly limited, and it is preferably 70 mass% or more, more preferably 80 mass% or more, still more preferably 90 mass% or more, particularly preferably 95 mass% or more, even more preferably 99 mass% or more, and most preferably 99.5 mass% or more. For example, the content may be 99.8 mass% or more, or 99.9 mass% or more, and when two or more masking components are used in combination, the content may be 100 mass%. It is sufficient that, when two or more masking components are used in combination, the total amount thereof falls within the above range.

Other components aside from the masking component can be used as long as they do not inhibit the objectives and effects of the present invention. Although not particularly limited, various synthetic flavors, natural flavors, natural essential oils, plant extracts, solvents, fixatives, and the like, as exemplified in the flavor composition, can be used.

By using the off-odor suppressing agent of the present invention, it is possible to mask an off-odor, particularly an off-odor expressed as "dust odor," that is caused by a substance contained in food or drink which triggers olfactory receptor OR2AG2 response. Here, "dust odor" is a dusty odor having, optionally, at least one odor characteristic selected from the group consisting of "earthy," "grassy," "powdery," "medicinal," and "moldy," which comprises, as a primary note, at least one expression selected from the group consisting of "dusty," "earthy," and "grassy (bell pepper-like or vegetable-like)," or expressions similar thereto, as a descriptor expressing the odor characteristic, and optionally, causes discomfort to humans. Here, "expressions similar thereto" may be any expression that a person skilled in the art can recognize as a descriptor expressing the same odor characteristic, and is not particularly limited. Examples of expressions similar to "earthy" include "galbanum-like" and "smoky." In addition, examples of expressions similar to "grassy (bell pepper-like or vegetable-like)" include "vegetable-like" and "bell pepper-like". According to the present definition, for example, geosmin and 2-methylisoborneol, whose primary note is represented by the descriptor "musty/moldy," would not be recognized as "dust odor."

In the present invention, examples of off-odor-causing substances, particularly "dust odor"-causing substances, include the compounds represented by the formula (1) or (2), and can include one or more of these pyridines and pyrazines. Specific examples include 2-isobutylpyridine, 2-sec-butyl-3-methoxypyrazine, 2-isobutyl-3-methoxypyrazine, 2-methoxy-3-isopropylpyrazine, and 3-ethyl-2-pentylpyridine. According to the off-odor suppressing agent of the present invention, it is possible to mask an off-odor caused by one or more of these compounds contained in food or drink.

In addition, in the present invention, the "dust odor" may be a "dust odor" consisting of a single "dust odor"-causing substance, or a complex odor having a "dust odor," such as an extract of a fraction having a "dust odor." As long as there is a "dust odor," a substance causing the "dust odor" is necessarily present, and it is not necessary for the substance causing the "dust odor" to be identified.

For example, the "dust odor" may be a "dust odor" whose causative substance is an off-odor substance generated in food or drink containing one or more selected from the group consisting of aspartame, trans-2-hexenal, and hexanal, and it is not necessary for the off-odor substance to be identified.

The flavor composition of the present invention is a flavor composition for suppressing off-odor, which masks an off-odor, particularly an off-odor expressed as "dust odor," that is caused by a substance contained in food or drink which triggers olfactory receptor OR2AG2 response, and contains the aforementioned off-odor suppressing agent.

The content of the masking component in the flavor composition of the present invention is not particularly limited as long as it is an effective amount against the off-odor contained in the food or drink. Although not particularly limited, in general, the content is within a concentration range of preferably 0.01 ppb or more and 100,000 ppm or less, more preferably 0.1 ppb or more and 10,000 ppm or less, based on the mass of the flavor composition. When the content of the masking component is within the above range, it is possible to mask an off-odor contained in food or drink without affecting the flavor of the food or drink.

The flavor composition of the present invention can contain known flavors or conventional additives within a range that does not impair the effects of the present invention, that is, in a quantitative or qualitative range capable of reducing off-odors contained in food and drink.

Examples of flavors that can be incorporated into the flavor composition of the present invention include various synthetic flavors, natural flavors, natural essential oils, and plant extracts, and include the natural essential oils, natural flavors, and synthetic flavors described in "Patent Gazette, Customary Technology Set (Flavors and Fragrances), Part 2: Food Flavoring," pp. 88-131, published on January 14, 2000.

In addition, the flavor composition of the present invention can contain, as necessary, commonly used solvents, such as water and ethanol; and fixatives, such as ethylene glycol, propylene glycol, dipropylene glycol, hexylene glycol, glycerin, triethyl citrate, medium-chain fatty acid triglycerides, medium-chain fatty acid diglycerides, and animal or vegetable fats and oils.

By incorporating the off-odor suppressing agent or the flavor composition of the present invention, it is possible to mask an off-odor, particularly an off-odor expressed as "dust odor," that is caused by a substance contained in food or drink which triggers olfactory receptor OR2AG2 response. By containing the masking component, it is possible to reduce the perception of an off-odor contained in food or drink.

The food or drink of the present invention is not particularly limited as long as it can incorporate the off-odor suppressing agent or the flavor composition of the present invention.

Examples of the foods and drinks of the present invention include drinks such as fruit drinks, vegetable drinks, soft drinks, carbonated drinks, flavored waters, functional drinks, nutritional drinks, alcoholic drinks, non-alcoholic drinks, milk drinks, and protein drinks; tea drinks and preference drinks such as black tea, green tea, oolong tea, herbal tea, coffee, and cocoa; plant-based alternative drinks such as soy milk drinks, oat milk drinks, and almond milk drinks; fermented dairy products such as yogurts and cheeses; frozen desserts such as ice confections, lacto ice, ice milk, and ice cream; desserts such as puddings, jellies, bavarois, and mousses; confectionery such as chewing gum, candies, gummy candies, tablets, refreshing confectionery, chocolates, chocolate confectionery, and snacks; pastes and creams such as jams, dessert sauces, flower pastes, margarines, fat spreads, filling creams, and whipped creams; agricultural and processed agricultural foods; meat and processed meat products; fish and marine processed foods; dairy fat products; cooked rice foods such as retort rice and germinated brown rice; noodles such as instant noodles, dried noodles, and chilled noodles; breads such as bread, meat buns, and savory breads; soups; prepared and processed foods such as retort foods, pasta sauces, canned foods, and frozen or chilled foods; seasonings such as sauces, soy sauce, tare sauce, tsuyu sauce, mayonnaise, ketchup, dressings, tube products, dashi stock base, Chinese seasonings, Western-style seasonings, and various roux; spices; edible animal or vegetable oils and fats; and plant-based alternative foods. In addition, the flavor composition of the present invention can also be used in products for oral use such as dentifrice, mouthwashes, oral rinses, mouth sprays, and gargles; dishwashing detergents; and the like.

The content of the masking component to be incorporated into a food or drink of the present invention is not particularly limited as long as it is an effective amount against the off-odor contained in the food or drink, and it is within a range of preferably 10 ppt or more and 10 ppm or less, more preferably 100 ppt or more and 1 ppm or less, and still more preferably 1 ppb or more and 100 ppb or less, based on the mass of the food or drink. Within the above range, an effect of masking an off-odor contained in food or drink is obtained without affecting the flavor of the food or drink.

The present invention provides, as one embodiment, a method for producing a food or drink, comprising adding to the food or drink one or more masking components selected from the group consisting of isoamyl cinnamate, cinnamyl cinnamate, δ-damascone, 2,3-heptanedione, carvacrol, vanitol, and 5-methyl-2-phenyl-2-hexenal.

The content of the masking component to be incorporated into a food or drink is within a range of preferably 10 ppt or more and 10 ppm or less, more preferably 100 ppt or more and 1 ppm or less, and still more preferably 1 ppb or more and 100 ppb or less, based on the mass of the food or drink.

The masking component may be used alone or in combination of two or more. When two or more masking components are used, it is sufficient that their total concentration falls within the above range. The timing for adding the masking component is not particularly limited. The masking component is preferably added in a manner that does not impair its masking effect.

In addition, the present invention provides, as another embodiment, a masking method for a food or drink, comprising adding to the food or drink one or more selected from the group consisting of isoamyl cinnamate, cinnamyl cinnamate, δ-damascone, 2,3-heptanedione, carvacrol, vanitol, and 5-methyl-2-phenyl-2-hexenal.

The amount of the masking component used and the timing of its addition are the same as those described in the method for producing the food or drink.

### Examples

Hereinafter, the present invention will be described in further detail with reference to Examples, but the present invention is not limited in any way to these Examples.

### [Reference Example 1]

### Identification of olfactory receptor that responds to representative "dust odor" substance: 2-isobutyl-3-methoxypyrazine

### (1-1) Cloning of olfactory receptor genes

Human olfactory receptor genes were obtained by cloning via PCR from Human Genomic DNA: Female (Promega) based on the base sequence information registered on the aforementioned NCBI (GenBank) website (see SEQ ID No: 1). A human olfactory receptor gene expression vector was obtained by inserting into a pME18S vector DNA encoding the N-terminal 20 amino acid residues of bovine rhodopsin (DNA consisting of bases 1 to 60 of the base sequence of SEQ ID No: 3), and further inserting the obtained human olfactory receptor gene downstream thereof. Bovine rhodopsin is registered on the NCBI (GenBank) website under Accession Number NM_001014890.2 and Accession Number NP_001014890.1. Bovine rhodopsin is a protein (polypeptide) consisting of the amino acid sequence (SEQ ID No: 4) encoded by the DNA at positions 1 to 1047 of the base sequence shown in SEQ ID No: 3.

### (1-2) Expression of olfactory receptor gene in HEK293T cells

0.05 µg of the human olfactory receptor gene expression vector, 0.01 µg of RTP1S vector, 0.01 µg of the firefly luciferase vector pGL4.29 (Promega) containing a cAMP response element promoter, and 0.005 µg of the Renilla luciferase vector pGL4.74 (Promega) containing a thymidine kinase promoter were dissolved in 10 µL of Opti-MEM I (gibco) to prepare a gene solution (for one well). HEK293T cells were seeded at 100 µL per well in a 96-well plate (Biocoat, Corning) at a cell number that would reach confluence after 24 hours. The gene solution was added to each well using lipofection in accordance with the instructions for Lipofectamine 3000 to introduce the gene into the cells, which were then cultured at 37°C in a 5% carbon dioxide atmosphere for 24 hours.

### (1-3) Luciferase reporter gene assay

After removing the culture medium, 60 µL of an odorant compound sample prepared in CD293 medium (gibco) (supplemented with 20 µM L-glutamine), at the concentration required for measurement, was added to each well. After stimulation for 3 hours, luciferase activity was measured in accordance with the instructions for the Dual-Luciferase Reporter Assay System (Promega). The response intensity of the olfactory receptor was determined using, as an index, a Fold Increase value obtained by dividing the luciferase activity generated by stimulation with the odorant compound by the luciferase activity generated in a test system free of the odorant compound.

### (1-4) Olfactory receptor screening for 2-isobutyl-3-methoxypyrazine

Based on (1-1) to (1-3) above, HEK293 cells individually expressing each of 396 human olfactory receptors were prepared, to which 1 mM of 2-isobutyl-3-methoxypyrazine was added to determine the response of each of the 396 olfactory receptors as a Fold Increase value. The results are shown in Figure 1.

### [Reference Example 2]

### Demonstration that the olfactory receptor OR2AG2 is an odor-note-specific receptor for "dust odor"-causing substances

### (2-1) Screening of odorant substances that respond to OR2AG2

A human olfactory receptor OR2AG2 gene expression vector was cloned, and a total of 1,367 odorant substances were individually adjusted and added to HEK293T cells expressing the olfactory receptor OR2AG2 gene at the maximum appropriate concentration within the final concentration range of 1 µM to 1 mM that does not cause cytotoxicity, followed by a luciferase reporter gene assay. All 1,367 odorant substances used were annotated with odor-note information by odor experts. For odorant substances whose response values in the luciferase reporter gene assay were equal to or greater than a predetermined threshold, the primary note from the odor-note information was extracted, and the proportion of each odor note was determined. The results are shown in Figure 2.

### (2-2) Confirmation that "dust odor" compounds respond to OR2AG2 in concentration-dependent manner

The human olfactory receptor OR2AG2 gene expression vector was cloned, and to HEK293T cells expressing the olfactory receptor OR2AG2 gene was added representative samples of odorant substances having "dust odor," which are compounds that trigger OR2AG2 responses, as shown in Figure 2: a) 3-ethyl-2-pentylpyridine, b) 2-methoxy-3-isopropylpyrazine, c) 2-isobutyl-3-methoxypyrazine, and d) 2-sec-butyl-3-methoxypyrazine, at final concentrations of 3 µM, 10 µM, 30 µM, 100 µM, 300 µM, and 700 µM, followed by a luciferase reporter gene assay. The results are shown in Figure 3.

### [Example 1]

### Masking effect of isoamyl cinnamate on off-odor consisting of dust odor in water

An aqueous solution containing an off-odor component was prepared by adding 3-ethyl-2-pentylpyridine to ion-exchanged water to obtain a concentration of 0.1 ppm. Isoamyl cinnamate was added to the present aqueous solution containing the off-odor component at the concentrations shown in Table 1, and the intensity of the off-odor (off-flavor) (masking effect) for each sample as well as the intensity of the masking component itself (impact on the flavor of the food or drink itself) were evaluated. Regarding testing, six trained panelists were selected to conduct a sensory evaluation. The intensity of the off-odor in the aqueous solution containing the off-odor component but without the masking component was defined as "Rating: 4," while that of the ion-exchanged water free of the off-odor component was defined as "Rating: 0." The intensity of the off-odor (masking effect) for each sample was then evaluated relatively according to the following evaluation criteria.

### <Evaluation Criteria>

Off-odor (off-flavor) strongly perceived: 4 points
Off-odor (off-flavor) perceived: 3 points
Off-odor (off-flavor) slightly perceived: 2 points
Almost no off-odor (off-flavor) perceived: 1 point
No off-odor (off-flavor) perceived: 0 points

The intensity of the masking component (impact on the flavor of the food or drink itself) was then evaluated absolutely according to the following evaluation criteria.

### <Evaluation Criteria>

Masking component strongly perceived: 4 points
Masking component perceived: 3 points
Masking component slightly perceived: 2 points
Almost no masking component perceived: 1 point
No masking component perceived: 0 points

The results are as shown in Table 1, which shows the average scores of the evaluation results from each panelist.

### [Table 1]

**Table 1**

| Concentration of added isoamyl cinnamate | Intensity of off-odor | Intensity of masking component |
|---|---|---|
| 10 ppt | 3.3 | 0.3 |
| 100 ppt | 2.8 | 0.7 |
| 1 ppb | 2.3 | 0.7 |
| 10 ppb | 2.0 | 1.0 |
| 100 ppb | 1.8 | 1.3 |
| 1 ppm | 1.2 | 2.0 |
| 10 ppm | 1.2 | 2.3 |

From the results in Table 1, the masking effect of isoamyl cinnamate was observed. In particular, isoamyl cinnamate was shown to mask the off-odor caused by 3-ethyl-2-pentylpyridine at concentrations of 1 ppb or more and 10 ppm or less, without affecting the flavor of the food or drink itself.

### [Example 2]

### Masking effect of cinnamyl cinnamate on off-odor component consisting of dust odor in water

Except that cinnamyl cinnamate was added at the concentrations shown in Table 2 as the masking component, the intensity of the off-odor (off-flavor) (masking effect) for each sample as well as the intensity of the masking component itself (impact on the flavor of the food or drink itself) were evaluated in the same manner as in Example 1. The results are as shown in Table 2, which shows the average scores of the evaluation results from each panelist.

### [Table 2]

**Table 2**

| Concentration of added cinnamyl cinnamate | Intensity of off-odor | Intensity of masking component |
|---|---|---|
| 10 ppt | 3.2 | 0.2 |
| 100 ppt | 2.8 | 0.5 |
| 1 ppb | 2.7 | 0.7 |
| 10 ppb | 2.5 | 1.0 |
| 100 ppb | 1.8 | 1.5 |
| 1 ppm | 1.7 | 1.8 |
| 10 ppm | 1.2 | 2.3 |

From the results in Table 2, the masking effect of cinnamyl cinnamate was observed. In particular, cinnamyl cinnamate was shown to mask the off-odor caused by 3-ethyl-2-pentylpyridine at concentrations of 10 ppb or more and 10 ppm or less, without affecting the flavor of the food or drink itself.

### [Example 3]

### Masking effect of δ-damascone on off-odor component consisting of dust odor in water

Except that δ-damascone was added at the concentrations shown in Table 3 as the masking component, the intensity of the off-odor (off-flavor) (masking effect) for each sample as well as the intensity of the masking component itself (impact on the flavor of the food or drink itself) were evaluated in the same manner as in Example 1.

The results are as shown in Table 3, which shows the average scores of the evaluation results from each panelist.

### [Table 3]

**Table 3**

| Concentration of added δ-damascone | Intensity of off-odor | Intensity of masking component |
|---|---|---|
| 10 ppt | 2.8 | 0.7 |
| 100 ppt | 2.5 | 1.2 |
| 1 ppb | 2.0 | 1.3 |
| 10 ppb | 1.7 | 1.7 |
| 100 ppb | 1.2 | 2.3 |
| 1 ppm | 0.8 | 3.3 |
| 10 ppm | 0.7 | 3.8 |

From the results in Table 3, the masking effect of δ-damascone was observed. In particular, δ-damascone was shown to mask the off-odor caused by 3-ethyl-2-pentylpyridine at concentrations of 100 ppt or more and 100 ppb or less, without affecting the flavor of the food or drink itself.

### [Example 4]

### Masking effect of 2,3-heptanedione on off-odor component consisting of dust odor in water

Except that 2,3-heptanedione was added at the concentrations shown in Table 4 as the masking component, the intensity of the off-odor (off-flavor) (masking effect) for each sample as well as the intensity of the masking component itself (impact on the flavor of the food or drink itself) were evaluated in the same manner as in Example 1.

The results are as shown in Table 4, which shows the average scores of the evaluation results from each panelist.

### [Table 4]

**Table 4**

| Concentration of added 2,3-heptanedione | Intensity of off-odor | Intensity of masking component |
|---|---|---|
| 10 ppt | 2.8 | 0.2 |
| 100 ppt | 2.7 | 0.5 |
| 1 ppb | 2.3 | 1.0 |
| 10 ppb | 2.3 | 1.2 |
| 100 ppb | 1.7 | 1.5 |
| 1 ppm | 1.0 | 2.8 |
| 10 ppm | 0.5 | 4.0 |

From the results in Table 4, the masking effect of 2,3-heptanedione was observed. In particular, 2,3-heptanedione was shown to mask the off-odor caused by 3-ethyl-2-pentylpyridine at concentrations of 1 ppb or more and 100 ppb or less, without affecting the flavor of the food or drink itself.

### [Example 5]

### Masking effect of carvacrol on off-odor component consisting of dust odor in water

Except that carvacrol was added at the concentrations shown in Table 5 as the masking component, the intensity of the off-odor (off-flavor) (masking effect) for each sample as well as the intensity of the masking component itself (impact on the flavor of the food or drink itself) were evaluated in the same manner as in Example 1.

The results are as shown in Table 5, which shows the average scores of the evaluation results from each panelist.

### [Table 5]

**Table 5**

| Concentration of added carvacrol | Intensity of off-odor | Intensity of masking component |
|---|---|---|
| 10 ppt | 3.2 | 0.5 |
| 100 ppt | 2.8 | 0.7 |
| 1 ppb | 2.3 | 1.2 |
| 10 ppb | 1.8 | 1.3 |
| 100 ppb | 1.7 | 2.0 |
| 1 ppm | 1.2 | 3.2 |
| 10 ppm | 1.0 | 4.0 |

From the results in Table 5, the masking effect of carvacrol was observed. In particular, carvacrol was shown to mask the off-odor caused by 3-ethyl-2-pentylpyridine at concentrations of 1 ppb or more and 100 ppb or less, without affecting the flavor of the food or drink itself.

### [Example 6]

### Masking effect of vanitol on off-odor component consisting of dust odor in water

Except that vanitol was added at the concentrations shown in Table 6 as the masking component, the intensity of the off-odor (off-flavor) (masking effect) for each sample as well as the intensity of the masking component itself (impact on the flavor of the food or drink itself) were evaluated in the same manner as in Example 1.

The results are as shown in Table 6, which shows the average scores of the evaluation results from each panelist.

### [Table 6]

**Table 6**

| Concentration of added vanitol | Intensity of off-odor | Intensity of masking component |
|---|---|---|
| 10 ppt | 3.5 | 0.2 |
| 100 ppt | 3.0 | 0.3 |
| 1 ppb | 2.7 | 0.7 |
| 10 ppb | 2.5 | 0.8 |
| 100 ppb | 2.0 | 1.7 |
| 1 ppm | 1.5 | 2.3 |
| 10 ppm | 1.0 | 3.3 |

From the results in Table 6, the masking effect of vanitol was observed. In particular, vanitol was shown to mask the off-odor caused by 3-ethyl-2-pentylpyridine at concentrations of 10 ppb or more and 1 ppm or less, without affecting the flavor of the food or drink itself.

### [Example 7]

### Masking effect of 5-methyl-2-phenyl-2-hexenal on off-odor component consisting of dust odor in water

Except that 5-methyl-2-phenyl-2-hexenal was added at the concentrations shown in Table 7 as the masking component, the intensity of the off-odor (off-flavor) (masking effect) for each sample as well as the intensity of the masking component itself (impact on the flavor of the food or drink itself) were evaluated in the same manner as in Example 1.

The results are as shown in Table 7, which shows the average scores of the evaluation results from each panelist.

### [Table 7]

**Table 7**

| Concentration of added 5-methyl-2-phenyl-2-hexenal | Intensity of off-odor | Intensity of masking component |
|---|---|---|
| 10 ppt | 3.3 | 0.2 |
| 100 ppt | 3.0 | 0.2 |
| 1 ppb | 2.5 | 0.7 |
| 10 ppb | 2.3 | 1.2 |
| 100 ppb | 2.2 | 1.7 |
| 1 ppm | 1.8 | 2.2 |
| 10 ppm | 1.5 | 2.8 |

From the results in Table 7, the masking effect of 5-methyl-2-phenyl-2-hexenal was observed. In particular, 5-methyl-2-phenyl-2-hexenal was shown to mask the off-odor caused by 3-ethyl-2-pentylpyridine at concentrations of 1 ppb or more and 1 ppm or less, without affecting the flavor of the food or drink itself.

### [Example 8]

### Masking effect of cinnamyl cinnamate on off-odor component consisting of dust odor in water

An aqueous solution containing an off-odor component was prepared by adding 2-isobutylpyridine to ion-exchanged water to obtain a concentration of 0.1 ppm. Cinnamyl cinnamate was added to the present aqueous solution containing the off-odor component at the concentrations shown in Table 8, and the intensity of the off-odor (off-flavor) (masking effect) for each sample as well as the intensity of the masking component itself (impact on the flavor of the food or drink itself) were evaluated in the same manner as in Example 1.

The results are as shown in Table 8, which shows the average scores of the evaluation results from each panelist.

### [Table 8]

**Table 8**

| Concentration of added cinnamyl cinnamate | Intensity of off-odor | Intensity of masking component |
|---|---|---|
| 10 ppt | 3.3 | 0.0 |
| 100 ppt | 2.8 | 0.2 |
| 1 ppb | 2.3 | 0.5 |
| 10 ppb | 2.2 | 1.2 |
| 100 ppb | 1.8 | 1.3 |
| 1 ppm | 1.5 | 2.2 |
| 10 ppm | 1.0 | 3.0 |

From the results in Table 8, the masking effect of cinnamyl cinnamate was observed. In particular, cinnamyl cinnamate was shown to mask the off-odor caused by 2-isobutylpyridine at concentrations of 1 ppb or more and 1 ppm or less, without affecting the flavor of the food or drink itself.

### [Example 9]

### Masking effect of cinnamyl cinnamate on off-odor component consisting of dust odor in water

An aqueous solution containing an off-odor component was prepared by adding 2-isobutyl-3-methoxypyrazine to ion-exchanged water to obtain a concentration of 0.1 ppm. Cinnamyl cinnamate was added to the present aqueous solution containing the off-odor component at the concentrations shown in Table 9, and the intensity of the off-odor (off-flavor) (masking effect) for each sample as well as the intensity of the masking component itself (impact on the flavor of the food or drink itself) were evaluated in the same manner as in Example 1.

The results are as shown in Table 9, which shows the average scores of the evaluation results from each panelist.

### [Table 9]

**Table 9**

| Concentration of added cinnamyl cinnamate | Intensity of off-odor | Intensity of masking component |
|---|---|---|
| 10 ppt | 3.5 | 0.0 |
| 100 ppt | 3.2 | 0.2 |
| 1 ppb | 2.7 | 0.7 |
| 10 ppb | 2.5 | 1.0 |
| 100 ppb | 1.7 | 1.5 |
| 1 ppm | 1.0 | 2.7 |
| 10 ppm | 1.0 | 3.2 |

From the results in Table 9, the masking effect of cinnamyl cinnamate was observed. In particular, cinnamyl cinnamate was shown to mask the off-odor caused by 2-isobutyl-3-methoxypyrazine at concentrations of 10 ppb or more and 100 ppb or less, without affecting the flavor of the food or drink itself.

### [Example 10]

### Masking effect of cinnamyl cinnamate on off-odor component consisting of dust odor in water

An aqueous solution containing an off-odor component was prepared by adding 2-sec-butyl-3-methoxypyrazine to ion-exchanged water to obtain a concentration of 0.1 ppm. Cinnamyl cinnamate was added to the present aqueous solution containing the off-odor component at the concentrations shown in Table 10, and the intensity of the off-odor (off-flavor) (masking effect) for each sample as well as the intensity of the masking component itself (impact on the flavor of the food or drink itself) were evaluated in the same manner as in Example 1.

The results are as shown in Table 10, which shows the average scores of the evaluation results from each panelist.

### [Table 10]

**Table 10**

| Concentration of added cinnamyl cinnamate | Intensity of off-odor | Intensity of masking component |
|---|---|---|
| 10 ppt | 3.2 | 0.0 |
| 100 ppt | 2.8 | 0.3 |
| 1 ppb | 2.8 | 0.5 |
| 10 ppb | 2.7 | 0.7 |
| 100 ppb | 2.3 | 1.3 |
| 1 ppm | 1.8 | 2.2 |
| 10 ppm | 1.3 | 2.8 |

From the results in Table 10, the masking effect of cinnamyl cinnamate was observed. In particular, cinnamyl cinnamate was shown to mask the off-odor caused by 2-sec-butyl-3-methoxypyrazine at concentrations of 100 ppb or more and 1 ppm or less, without affecting the flavor of the food or drink itself.

### [Example 11]

### Masking effect of cinnamyl cinnamate on off-odor component consisting of dust odor in water

An aqueous solution containing an off-odor component was prepared by adding 2-methoxy-3-isopropylpyrazine to ion-exchanged water to obtain a concentration of 0.1 ppm. Cinnamyl cinnamate was added to the present aqueous solution containing the off-odor component at the concentrations shown in Table 11, and the intensity of the off-odor (off-flavor) (masking effect) for each sample as well as the intensity of the masking component itself (impact on the flavor of the food or drink itself) were evaluated in the same manner as in Example 1.

The results are as shown in Table 11, which shows the average scores of the evaluation results from each panelist.

### [Table 11]

**Table 11**

| Concentration of added cinnamyl cinnamate | Intensity of off-odor | Intensity of masking component |
|---|---|---|
| 10 ppt | 3.3 | 0.0 |
| 100 ppt | 3.2 | 0.2 |
| 1 ppb | 2.5 | 0.5 |
| 10 ppb | 2.0 | 1.2 |
| 100 ppb | 1.7 | 1.7 |
| 1 ppm | 1.3 | 2.5 |
| 10 ppm | 1.2 | 3.0 |

From the results in Table 11, the masking effect of cinnamyl cinnamate was observed. In particular, cinnamyl cinnamate was shown to mask the off-odor caused by 2-methoxy-3-isopropylpyrazine at concentrations of 1 ppb or more and 1 ppm or less, without affecting the flavor of the food or drink itself.

### [Example 12]

### Masking effect of cinnamyl cinnamate on off-odor component consisting of dust odor in soy milk

Soy milk containing an off-odor component was prepared by adding 2-methoxy-3-isopropylpyrazine to commercial soy milk to obtain a concentration of 100 ppt. Cinnamyl cinnamate was added to the present soy milk containing the off-odor component at the concentrations shown in Table 12, and the intensity of the off-odor (off-flavor) (masking effect) for each sample as well as the intensity of the masking component itself (impact on the flavor of the food or drink itself) were confirmed by the same evaluation method as in Example 1.

The results are as shown in Table 12, which shows the average scores of the evaluation results from each panelist.

### [Table 12]

**Table 12**

| Concentration of added cinnamyl cinnamate | Intensity of off-odor | Intensity of masking component |
|---|---|---|
| 10 ppt | 3.8 | 0.1 |
| 100 ppt | 3.3 | 0.1 |
| 1 ppb | 2.7 | 0.4 |
| 10 ppb | 2.3 | 0.6 |
| 100 ppb | 1.7 | 1.2 |
| 1 ppm | 1.5 | 1.8 |
| 10 ppm | 1.2 | 3.2 |

From the results in Table 12, the masking effect of cinnamyl cinnamate was observed. In particular, cinnamyl cinnamate was shown to mask the off-odor caused by 2-methoxy-3-isopropylpyrazine at concentrations of 10 ppb or more and 1 ppm or less, without affecting the flavor of the food or drink itself.

### [Example 13]

### Masking effect of 5-methyl-2-phenyl-2-hexenal on off-odor component consisting of dust odor in soy milk

Soy milk containing an off-odor component was prepared by adding 2-methoxy-3-isopropylpyrazine to commercial soy milk to obtain a concentration of 1 ppb. 5-Methyl-2-phenyl-2-hexenal was added to the present soy milk containing the off-odor component at the concentrations shown in Table 13, and the intensity of the off-odor (off-flavor) (masking effect) for each sample as well as the intensity of the masking component itself (impact on the flavor of the food or drink itself) were evaluated in the same manner as in Example 12.

The results are as shown in Table 13, which shows the average scores of the evaluation results from each panelist.

### [Table 13]

**Table 13**

| Concentration of added 5-methyl-2-phenyl-2-hexenal | Intensity of off-odor | Intensity of masking component |
|---|---|---|
| 10 ppt | 3.6 | 0.0 |
| 100 ppt | 3.4 | 0.0 |
| 1 ppb | 3.0 | 0.3 |
| 10 ppb | 2.7 | 0.7 |
| 100 ppb | 2.4 | 1.1 |
| 1 ppm | 1.9 | 1.7 |
| 10 ppm | 1.6 | 2.9 |

From the results in Table 13, the masking effect of 5-methyl-2-phenyl-2-hexenal was observed. In particular, 5-methyl-2-phenyl-2-hexenal was shown to mask the off-odor caused by 2-methoxy-3-isopropylpyrazine at concentrations of 100 ppb or more and 1 ppm or less, without affecting the flavor of the food or drink itself.

### [Example 14]

### Masking effect of δ-damascone on off-odor component consisting of dust odor in soy milk

Soy milk containing an off-odor component was prepared by adding 2-methoxy-3-isopropylpyrazine to commercial soy milk to obtain a concentration of 100 ppt, then δ-damascone was added at the concentrations shown in Table 14. The intensity of the off-odor (off-flavor) (masking effect) for each sample as well as the intensity of the masking component itself (impact on the flavor of the food or drink itself) were evaluated in the same manner as in Example 12.

The results are as shown in Table 14, which shows the average scores of the evaluation results from each panelist.

### [Table 14]

**Table 14**

| Concentration of added δ-damascone | Intensity of off-odor | Intensity of masking component |
|---|---|---|
| 1 ppt | 3.7 | 0.0 |
| 10 ppt | 3.7 | 0.1 |
| 100 ppt | 3.3 | 0.6 |
| 1 ppb | 2.5 | 1.3 |
| 10 ppb | 2.3 | 1.9 |
| 100 ppb | 1.7 | 2.9 |
| 1 ppm | 1.6 | 3.5 |

From the results in Table 14, the masking effect of δ-damascone was observed. In particular, δ-damascone was shown to mask 2-methoxy-3-isopropylpyrazine at concentrations of 1 ppb or more and 10 ppb or less, without affecting the flavor of the food or drink itself.

### [Example 15]

### Masking effect of vanitol on off-odor component consisting of dust odor in coffee

Two grams of commercial instant coffee were dissolved in 140 g of water to prepare a diluted coffee solution. A diluted coffee solution containing an off-odor component was prepared by adding 2-methoxy-3-isopropylpyrazine to this diluted coffee solution to obtain a concentration of 100 ppt. Vanitol was added to the present diluted coffee solution containing the off-odor component at the concentrations shown in Table 15, and the intensity of the off-odor (off-flavor) (masking effect) for each sample as well as the intensity of the masking component itself (impact on the flavor of the food or drink itself) were evaluated by the same evaluation method as in Example 1.

The results are as shown in Table 15, which shows the average scores of the evaluation results from each panelist.

### [Table 15]

**Table 15**

| Concentration of added vanitol | Intensity of off-odor | Intensity of masking component |
|---|---|---|
| 10 ppt | 3.8 | 0.0 |
| 100 ppt | 3.4 | 0.2 |
| 1 ppb | 2.8 | 0.4 |
| 10 ppb | 2.2 | 0.9 |
| 100 ppb | 1.9 | 1.6 |
| 1 ppm | 1.3 | 2.6 |
| 10 ppm | 0.7 | 3.9 |

From the results in Table 15, the masking effect of vanitol was observed. In particular, vanitol was shown to mask the off-odor caused by 2-methoxy-3-isopropylpyrazine at concentrations of 10 ppb or more and 100 ppb or less, without affecting the flavor of the food or drink itself.

### [Example 16]

### Masking effect of carvacrol on off-odor component consisting of dust odor in coffee

A diluted coffee solution containing an off-odor component was prepared in the same manner as in Example 15, and carvacrol was added at the concentrations shown in Table 16. The intensity of the off-odor (off-flavor) (masking effect) for each sample as well as the intensity of the masking component itself (impact on the flavor of the food or drink itself) were evaluated in the same manner as in Example 15.

The results are as shown in Table 16, which shows the average scores of the evaluation results from each panelist.

### [Table 16]

**Table 16**

| Concentration of added carvacrol | Intensity of off-odor | Intensity of masking component |
|---|---|---|
| 10 ppt | 3.3 | 0.2 |
| 100 ppt | 3.1 | 0.4 |
| 1 ppb | 2.5 | 1.0 |
| 10 ppb | 2.4 | 1.6 |
| 100 ppb | 1.7 | 2.6 |
| 1 ppm | 1.3 | 3.6 |
| 10 ppm | 1.1 | 4.0 |

From the results in Table 16, the masking effect of carvacrol was observed. In particular, carvacrol was shown to mask the off-odor caused by 2-methoxy-3-isopropylpyrazine at concentrations of 1 ppb or more and 10 ppb or less, without affecting the flavor of the food or drink itself.

### [Example 17]

### Masking effect of isoamyl cinnamate on off-odor component consisting of dust odor in vegetable juice

Vegetable juice containing an off-odor component was prepared by adding 2-methoxy-3-isopropylpyrazine to commercial vegetable juice to obtain a concentration of 1 ppb. Isoamyl cinnamate was added to the present vegetable juice containing the off-odor component at the concentrations shown in Table 17, and the intensity of the off-odor (off-flavor) (masking effect) for each sample as well as the intensity of the masking component itself (impact on the flavor of the food or drink itself) were evaluated by the same evaluation method as in Example 1.

The results are as shown in Table 17, which shows the average scores of the evaluation results from each panelist.

### [Table 17]

**Table 17**

| Concentration of added isoamyl cinnamate | Intensity of off-odor | Intensity of masking component |
|---|---|---|
| 10 ppt | 3.9 | 0.4 |
| 100 ppt | 2.9 | 0.9 |
| 1 ppb | 2.6 | 1.1 |
| 10 ppb | 2.4 | 1.4 |
| 100 ppb | 2.0 | 2.0 |
| 1 ppm | 1.7 | 2.4 |
| 10 ppm | 1.4 | 3.1 |
| 100 ppm | 1.0 | 3.6 |

From the results in Table 17, the masking effect of isoamyl cinnamate was observed. In particular, isoamyl cinnamate was shown to mask the off-odor caused by 2-methoxy-3-isopropylpyrazine at concentrations of 1 ppb or more and 1 ppm or less, without affecting the flavor of the food or drink itself.

### [Example 18]

### Masking effect of cinnamyl cinnamate on off-odor component consisting of dust odor in vegetable juice

Cinnamyl cinnamate was added at the concentrations shown in Table 18, and the intensity of the off-odor (off-flavor) (masking effect) for each sample as well as the intensity of the masking component itself (impact on the flavor of the food or drink itself) were evaluated in the same manner as in Example 17.

The results are as shown in Table 18, which shows the average scores of the evaluation results from each panelist.

### [Table 18]

**Table 18**

| Concentration of added cinnamyl cinnamate | Intensity of off-odor | Intensity of masking component |
|---|---|---|
| 10 ppt | 3.6 | 0.6 |
| 100 ppt | 2.1 | 1.1 |
| 1 ppb | 2.1 | 1.4 |
| 10 ppb | 2.0 | 2.0 |
| 100 ppb | 1.7 | 2.3 |
| 1 ppm | 1.4 | 2.9 |
| 10 ppm | 1.0 | 3.3 |
| 100 ppm | 0.9 | 3.9 |

From the results in Table 18, the masking effect of cinnamyl cinnamate was observed. In particular, cinnamyl cinnamate was shown to mask 2-methoxy-3-isopropylpyrazine at concentrations of 100 ppt or more and 100 ppb or less, without affecting the flavor of the food or drink itself.

### [Example 19]

### Masking effect of δ-damascone on off-odor component consisting of dust odor in vegetable juice

δ-Damascone was added at the concentrations shown in Table 19, and the intensity of the off-odor (off-flavor) (masking effect) for each sample as well as the intensity of the masking component itself (impact on the flavor of the food or drink itself) were evaluated in the same manner as in Example 17.

The results are as shown in Table 19, which shows the average scores of the evaluation results from each panelist.

### [Table 19]

**Table 19**

| Concentration of added δ-damascone | Intensity of off-odor | Intensity of masking component |
|---|---|---|
| 1 ppt | 3.4 | 0.7 |
| 10 ppt | 2.6 | 1.0 |
| 100 ppt | 2.3 | 1.4 |
| 1 ppb | 1.7 | 1.7 |
| 10 ppb | 1.3 | 2.3 |
| 100 ppb | 1.3 | 2.7 |
| 1 ppm | 0.9 | 3.4 |
| 10 ppm | 0.7 | 3.6 |

From the results in Table 19, the masking effect of δ-damascone was observed. In particular, δ-damascone was shown to mask 2-methoxy-3-isopropylpyrazine at concentrations of 100 ppt or more and 10 ppb or less, without affecting the flavor of the food or drink itself.

### [Example 20]

### Masking effect of 2,3-heptanedione on off-odor component consisting of dust odor in vegetable juice

2,3-Heptanedione was added at the concentrations shown in Table 20, and the intensity of the off-odor (off-flavor) (masking effect) for each sample as well as the intensity of the masking component itself (impact on the flavor of the food or drink itself) were evaluated in the same manner as in Example 17.

The results are as shown in Table 20, which shows the average scores of the evaluation results from each panelist.

### [Table 20]

**Table 20**

| Concentration of added 2,3-heptanedione | Intensity of off-odor | Intensity of masking component |
|---|---|---|
| 10 ppt | 3.9 | 0.3 |
| 100 ppt | 2.9 | 0.7 |
| 1 ppb | 2.7 | 1.4 |
| 10 ppb | 2.3 | 2.1 |
| 100 ppb | 2.0 | 2.6 |
| 1 ppm | 1.6 | 2.9 |
| 10 ppm | 1.1 | 3.4 |
| 100 ppm | 0.7 | 3.4 |

From the results in Table 20, the masking effect of 2,3-heptanedione was observed. In particular, 2,3-heptanedione was shown to mask the off-odor caused by 2-methoxy-3-isopropylpyrazine at a concentration of about 10 ppb, without affecting the flavor of the food or drink itself.

### [Example 21]

### Masking effect of carvacrol on off-odor component consisting of dust odor in vegetable juice

Carvacrol was added at the concentrations shown in Table 21, and the intensity of the off-odor (off-flavor) (masking effect) for each sample as well as the intensity of the masking component itself (impact on the flavor of the food or drink itself) were evaluated in the same manner as in Example 17.

The results are as shown in Table 21, which shows the average scores of the evaluation results from each panelist.

### [Table 21]

**Table 21**

| Concentration of added carvacrol | Intensity of off-odor | Intensity of masking component |
|---|---|---|
| 1 ppt | 3.7 | 0.3 |
| 10 ppt | 2.7 | 0.6 |
| 100 ppt | 2.0 | 0.9 |
| 1 ppb | 1.9 | 1.0 |
| 10 ppb | 1.7 | 1.6 |
| 100 ppb | 1.1 | 2.4 |
| 1 ppm | 0.9 | 3.1 |
| 10 ppm | 0.6 | 3.4 |

From the results in Table 21, the masking effect of carvacrol was observed. In particular, carvacrol was shown to mask 2-methoxy-3-isopropylpyrazine at concentrations of 100 ppt or more and 100 ppb or less, without affecting the flavor of the food or drink itself.

### [Example 22]

### Masking effect of vanitol on off-odor component consisting of dust odor in vegetable juice

Vanitol was added at the concentrations shown in Table 22, and the intensity of the off-odor (off-flavor) (masking effect) for each sample as well as the intensity of the masking component itself (impact on the flavor of the food or drink itself) were evaluated in the same manner as in Example 17.

The results are as shown in Table 22, which shows the average scores of the evaluation results from each panelist.

### [Table 22]

**Table 22**

| Concentration of added vanitol | Intensity of off-odor | Intensity of masking component |
|---|---|---|
| 10 ppt | 3.7 | 0.1 |
| 100 ppt | 2.9 | 0.9 |
| 1 ppb | 2.6 | 1.3 |
| 10 ppb | 2.1 | 1.6 |
| 100 ppb | 2.0 | 2.1 |
| 1 ppm | 1.4 | 2.4 |
| 10 ppm | 0.9 | 3.1 |
| 100 ppm | 0.4 | 3.6 |

From the results in Table 22, the masking effect of vanitol was observed. In particular, vanitol was shown to mask 2-methoxy-3-isopropylpyrazine at concentrations of 10 ppb or more and 1 ppm or less, without affecting the flavor of the food or drink itself.

### [Example 23]

### Masking effect of 5-methyl-2-phenyl-2-hexenal on off-odor component consisting of dust odor in vegetable juice

5-Methyl-2-phenyl-2-hexenal was added at the concentrations shown in Table 23, and the intensity of the off-odor (off-flavor) (masking effect) for each sample as well as the intensity of the masking component itself (impact on the flavor of the food or drink itself) were evaluated in the same manner as in Example 17.

The results are as shown in Table 23, which shows the average scores of the evaluation results from each panelist.

### [Table 23]

**Table 23**

| Concentration of added 5-methyl-2-phenyl-2-hexenal | Intensity of off-odor | Intensity of masking component |
|---|---|---|
| 10 ppt | 3.7 | 0.3 |
| 100 ppt | 2.9 | 0.9 |
| 1 ppb | 2.3 | 1.1 |
| 10 ppb | 1.9 | 1.6 |
| 100 ppb | 1.6 | 2.1 |
| 1 ppm | 1.6 | 2.4 |
| 10 ppm | 0.7 | 3.3 |
| 100 ppm | 0.4 | 3.7 |

From the results in Table 23, the masking effect of 5-methyl-2-phenyl-2-hexenal was observed. 5-Methyl-2-phenyl-2-hexenal was shown to mask the off-odor caused by 2-methoxy-3-isopropylpyrazine at concentrations of 1 ppb or more and 1 ppm or less, without affecting the flavor of the food or drink itself.

### [Example 24]

### Masking effect of cinnamyl cinnamate on off-odor component consisting of dust odor in tablet confectionery

Tablet confectionery was prepared using a punch with a diameter of 7 mm and die set according to the formulation in Table 24, and 100 ppm each of hexanal and trans-2-hexenal was added. Cinnamyl cinnamate was added to the present tablet confectionery at the concentrations shown in Table 25, and the tablet confectionery was left to stand at 40°C for two weeks to prepare stressed tablet confectionery.

For the present stressed tablet confectionery, the intensity of the off-odor (off-flavor) (masking effect) for each sample as well as the intensity of the masking component itself (impact on the flavor of the food or drink itself) were evaluated in the same manner as in Example 1.

The results are as shown in Table 25, which shows the average scores of the evaluation results from each panelist.

### [Table 24]

**Table 24**

| Component | Weight ratio |
|---|---|
| Sorbitol | 95.5 |
| Sucrose fatty acid ester | 2 |
| Aspartame | 1 |
| Fine silicon dioxide | 0.5 |

### [Table 25]

**Table 25**

| Concentration of added cinnamyl cinnamate | Intensity of off-odor | Intensity of masking component |
|---|---|---|
| 10 ppt | 3.0 | 0.5 |
| 1 ppb | 2.2 | 1.0 |
| 100 ppb | 1.5 | 1.8 |
| 10 ppm | 1.3 | 2.8 |

From the results in Table 25, cinnamyl cinnamate was shown to mask the off-odor generated by stressing the tablet at concentrations of 1 ppb or more and 100 ppb or less, without affecting the flavor of the food or drink itself.

## Claims

1. An off-odor suppressing agent for masking an off-odor contained in food or drink,
wherein a substance that causes the off-odor is a substance that triggers olfactory receptor polypeptide response, the polypeptide being at least one selected from the group consisting of olfactory receptor OR2AG2 and polypeptides that comprise an amino acid sequence having 80% or more identity with the amino acid sequence of the olfactory receptor and that are responsive to off-odor-causing substances, and
the off-odor suppressing agent comprises, as a masking component, one or more selected from the group consisting of isoamyl cinnamate, cinnamyl cinnamate, δ-damascone, 2,3-heptanedione, carvacrol, vanitol, and 5-methyl-2-phenyl-2-hexenal.

2. The off-odor suppressing agent according to claim 1, wherein the substance that causes the off-odor comprises one or more selected from the group consisting of compounds represented by the following formula (1) or (2): 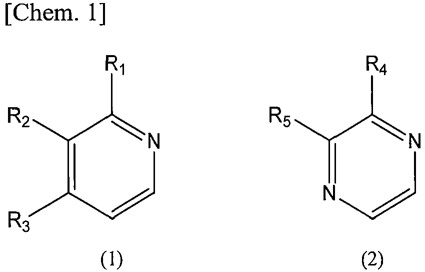
wherein, in formula (1), R₁ represents a hydrogen atom, an unbranched alkyl group having 1 to 3 carbon atoms, an optionally branched alkyl group having 4 to 6 carbon atoms, or an alkoxy group having 1 to 3 carbon atoms; R₂ and R₃ each independently represent a hydrogen atom, an optionally branched alkyl group having 1 to 6 carbon atoms, or an alkoxy group having 1 to 3 carbon atoms; and
in formula (2), R₄ and R₅ each independently represent a hydrogen atom, an optionally branched alkyl group having 1 to 6 carbon atoms, or an alkoxy group having 1 to 3 carbon atoms.

3. The off-odor suppressing agent according to claim 1, wherein the substance that causes the off-odor comprises an off-odor substance generated in food or drink comprising one or more selected from the group consisting of aspartame, trans-2-hexenal, and hexanal.

4. The off-odor suppressing agent according to claim 1, wherein the substance that causes the off-odor comprises one or more selected from the group consisting of 3-ethyl-2-pentylpyridine, 2-sec-butyl-3-methoxypyrazine, 2-isobutyl-3-methoxypyrazine, 2-methoxy-3-isopropylpyrazine, and 2-isobutylpyridine.

5. The off-odor suppressing agent according to claim 1, wherein the off-odor is an off-odor expressed as "dust odor,"
has at least one odor characteristic selected from the group consisting of dusty, and optionally, earthy, grassy, powdery, medicinal, and moldy,
is an odor that comprises, as a primary note, at least one expression selected from the group consisting of "dusty," "earthy," and "grassy (bell pepper-like or vegetable-like)," or expressions similar thereto, as a descriptor expressing the odor characteristic, and
optionally, is an odor that causes discomfort to humans.

6. A flavor composition for suppressing off-odor, which masks an off-odor contained in food or drink, the composition comprising the off-odor suppressing agent according to any one of claims 1 to 5.

7. A food or drink comprising the off-odor suppressing agent according to any one of claims 1 to 5.
